# EUROPEAN PATENT APPLICATION

(11) **EP 4 800 874 A1**
(43) Date of publication of application: **02.09.2026**
(21) Application number: 24882012.8
(22) Date of filing: 28.08.2024
(51) Int. Cl.: H02J 7/00, B60L 53/14, B60L 53/62, H02J 7/10

(54) **MOBILE BODY, CONTROL DEVICE, AND CONNECTOR LOCK CONTROL METHOD**

(30) Priority: 24.10.2023 JP 2023182478
(71) Applicant: TOYOTA JIDOSHA KABUSHIKI KAISHA, Toyota-Shi, Aichi-Ken 471-8571 (JP)
(72) Inventor: ANDO, Toru, Toyota-shi, Aichi 471-8571 (JP)
(74) Representative: TBK
(86) International application number: PCT/JP2024/030638
(87) International publication number: WO 2025/088895

(57) **Abstract**

Provided are a device and a method for more reliably suppressing a flow of a large current to an unlocked connector connected to a port of a movable body in power transmission performed by the movable body. The movable body includes: a port to and from which a connector for power transmission is attachable and detachable; and a first lock device that switches between a locked state and an unlocked state of the connector connected to the port. The first lock device is configured to switch the connector to the locked state when the connector connected to the port is in the unlocked state and a current flowing through the connector is larger than a first threshold value (S11 to S13).

## Description

### TECHNICAL FIELD

The present disclosure relates to a movable body, a controller, and a connector lock control method.

### BACKGROUND ART

Japanese Patent Laying-Open No. 2019-047544 (PTL 1) discloses a technique of switching between a locked state and an unlocked state of a charging connector connected to an inlet of a vehicle. In this technique, a controller of the vehicle controls a current flowing through the charging connector connected to the inlet.

### CITATION LIST

### PATENT LITERATURE

PTL 1: Japanese Patent Laying-Open No. 2019-047544

### SUMMARY OF INVENTION

### TECHNICAL PROBLEM

In recent years, development of a technique of causing not only a stationary power storage device but also a movable body to perform power transmission has been underway. Such a movable body includes a port to and from which a connector for power transmission is attached and detached. The connector is connected to the port when the movable body is not moving, and the connector is disconnected from the port when the movable body moves. For example, according to a technique that allows a vehicle to connect to the outside, a so-called V2X (Vehicle to Everything) technique, electric power can be supplied from the vehicle to a construction (such as a house, a building or a factory), a power system (grid), a power load, another vehicle or the like outside the vehicle. However, when the connector for power transmission is connected to the port of the vehicle and large-current power transmission is performed in the connector in an unlocked state, the power transmission tends to become unstable. In addition, when the connector is separated from the port during the large-current power transmission, the port and the connector tend to be damaged by the large current. Thus, in the technique described in PTL 1 above, the controller of the vehicle permits a large charging current when the connector connected to the port (inlet) is in the locked state, and the controller of the vehicle permits a small charging current when the connector connected to the port (inlet) is in the unlocked state. That is, in the technique described in PTL 1 above, the charging current is controlled by the controller of the vehicle.

However, the magnitude of the current (e.g., charging current) in power transmission cannot always be controlled on the vehicle side. For example, in V2L (Vehicle to Load), a current supplied from a vehicle to a power load connected to the vehicle tends to vary in accordance with a state of the power load. In addition, when a power storage device mounted on a vehicle is charged with electric power supplied from an electrical facility, the charging current cannot in some cases be controlled on the vehicle side. For example, in a system where an electrical facility has the initiative in charging, the charging current may be controlled in accordance with an instruction from the electrical facility. The technique described in PTL 1 above cannot in some cases suppress a flow of a large current to the connector in the unlocked state connected to the port of the movable body (e.g., vehicle) in power transmission performed by the movable body.

The present disclosure has been made to solve the above-described problem and an object thereof is to more reliably suppress a flow of a large current to a connector in an unlocked state connected to a port of a movable body in power transmission performed by the movable body.

### SOLUTION TO PROBLEM

According to a first aspect of the present disclosure, there is provided a movable body as indicated below.

(Clause 1) The movable body includes: a port to and from which a connector for power transmission is attachable and detachable; and a first lock device that switches between a locked state and an unlocked state of the connector connected to the port. The first lock device is configured to switch the connector to the locked state when the connector connected to the port is in the unlocked state and a current flowing through the connector is larger than a first threshold value.

According to the above-described configuration, when the current flowing through the connector in the unlocked state connected to the port becomes larger than the first threshold value, the first lock device switches the connector to the locked state. Therefore, a flow of a large current to the connector in the unlocked state connected to the port of the movable body in power transmission performed by the movable body can be more reliably suppressed.

The above-described first threshold value and a below-described second threshold value may be the same as or different from each other. Each of the threshold values can be set as desired.

The movable body according to Clause 1 above may have a configuration according to any one of Clauses 2 to 9 as indicated below.

(Clause 2) The first lock device included in the movable body according to Clause 1 is configured to: switch the connector to the unlocked state, when an unlock operation is performed in a state where the current flowing through the connector in the locked state connected to the port is smaller than a second threshold value; and decrease the current flowing through the connector to be smaller than the second threshold value, and thereafter, switch the connector to the unlocked state, when the unlock operation is performed in a state where the current flowing through the connector in the locked state connected to the port is larger than the second threshold value.

According to the above-described configuration, the connector is switched to the unlocked state in response to the unlock operation. When the unlock operation is performed in a state where the current flowing through the connector is larger than the second threshold value, the first lock device decreases the current flowing through the connector to be smaller than the second threshold value, and thereafter, switches the connector to the unlocked state. Therefore, a flow of a large current to the connector in the unlocked state can be more reliably suppressed.

(Clause 3) **In** the movable body according to Clause 2, the unlock operation is an operation performed by an owner of the movable body to switch the connector to the unlocked state.

**In** the above-described configuration, an operation performed by a third party other than the owner of the movable body is not recognized as the unlock operation. Thus, transition of the connector to the unlocked state contrary to the intention of the owner of the movable body is suppressed.

(Clause 4) **In** the movable body according to any one of Clauses 1 to 3, the first lock device is configured to switch the connector to the unlocked state when an unlock condition is satisfied. The unlock condition includes a condition that the connector connected to the port is in the locked state, and a condition that the current flowing through the connector is smaller than a second threshold value.

According to the above-described configuration, unless the current flowing through the connector in the locked state connected to the port is smaller than the second threshold value, the first lock device does not switch the connector to the unlocked state. Therefore, a flow of a large current to the connector in the unlocked state connected to the port of the movable body in power transmission performed by the movable body can be more reliably suppressed.

(Clause 5) The movable body according to Clause 4 is a vehicle including a door for getting on and off the vehicle, and a second lock device that switches between a locked state and an unlocked state of the door. The unlock condition according to Clause 4 further includes a condition that the door is in the unlocked state.

According to the above-described configuration, unless the door of the vehicle is in the unlocked state, the first lock device does not switch the connector to the unlocked state. When the door of the vehicle is in the unlocked state, there is a high possibility that the owner of the vehicle is near the vehicle. Therefore, according to the above-described configuration, transition of the connector to the unlocked state contrary to the intention of the owner of the movable body (vehicle) is suppressed.

(Clause 6) The movable body according to Clause 4 or 5 further includes a sensing device that senses a terminal of an owner of the movable body. The unlock condition further includes a condition that the terminal is sensed by the sensing device.

According to the above-described configuration, unless the terminal of the owner of the movable body is sensed, the first lock device does not switch the connector to the unlocked state. When the terminal of the owner of the movable body is sensed, there is a high possibility that the owner of the movable body is near the movable body. Therefore, according to the above-described configuration, transition of the connector to the unlocked state contrary to the intention of the owner of the movable body is suppressed.

(Clause 7) In the movable body according to any one of Clauses 4 to 6, the unlock condition further includes a condition that a number of times of switching between the locked state and the unlocked state of the connector is smaller than a prescribed number of times.

According to the above-described configuration, when the number of times of switching between the locked state and the unlocked state of the connector becomes larger than the prescribed number of times, the first lock device no longer switches the connector to the unlocked state. Thus, deterioration of the first lock device is suppressed.

(Clause 8) The first lock device included in the movable body according to any one of Clauses 1 to 3 is configured to switch the connector to the unlocked state when the connector connected to the port is in the locked state and the current flowing through the connector is smaller than a second threshold value.

According to the above-described configuration, when the current flowing through the connector becomes smaller than the second threshold value, the connector is switched to the unlocked state. Therefore, the connector tends to be disconnected from the port at the timing at which the current flowing through the connector is sufficiently decreased.

(Clause 9) The movable body according to any one of Clauses 1 to 8 further has the following features. The movable body is a vehicle including a power storage device. The connector is a discharging connector including an electrical outlet. The power transmission includes V2L (Vehicle to Load) to supply electric power stored in the power storage device from the discharging connector connected to the port to a power load connected to the electrical outlet. **In** the V2L, a current flowing through the discharging connector connected to the port varies in accordance with a state of the power load connected to the electrical outlet.

According to the above-described configuration, the V2L becomes possible. However, in the V2L, the current flowing through the discharging connector varies in accordance with the state of the power load. For example, as the electric power requested by the power load increases, the current flowing through the discharging connector may also increase. Regarding this point, in the above-described vehicle, in the V2L, when the current flowing through the discharging connector in the unlocked state becomes larger than the first threshold value, the first lock device switches the discharging connector to the locked state. Thus, a flow of a large current to the discharging connector in the unlocked state connected to the port is suppressed.

According to a second aspect of the present disclosure, there is provided a controller as indicated below.

(Clause 10) The controller is configured to control a connector device that switches between a locked state and an unlocked state of a connector for power transmission connected to a port of a movable body. The controller is configured to control the connector device to switch the connector to the locked state when the connector connected to the port is in the unlocked state and a current flowing through the connector is larger than a threshold value.

Similarly to the movable body according to Clause 1 as described above, the above-described controller also makes it possible to more reliably suppress a flow of a large current to the connector in the unlocked state connected to the port of the movable body in power transmission performed by the movable body.

According to a third aspect of the present disclosure, there is provided a controller as indicated below.

(Clause 11) The controller is configured to control a connector device that switches between a locked state and an unlocked state of a connector for power transmission connected to a port of a movable body. The controller is configured to: predict a change in a current flowing through the connector in the unlocked state connected to the port; and control, based on a result of prediction, the connector device to switch the connector to the locked state before the current flowing through the connector becomes larger than a threshold value.

According to the above-described configuration, the change in the current flowing through the connector in the unlocked state connected to the port is predicted. Then, based on the result of prediction, the above-described controller switches the connector to the locked state before the current becomes larger than the threshold value. Therefore, a flow of a large current to the connector in the unlocked state connected to the port of the movable body in power transmission performed by the movable body can be more reliably suppressed.

(Clause 12) The controller according to Clause 11 is configured to: predict, based on the result of prediction, a time period until the current flowing through the connector in the unlocked state connected to the port reaches the threshold value; and control the connector device to switch the connector to the locked state when the predicted time period is shorter than a prescribed time period.

According to the above-described configuration, the time period until the current flowing through the connector in the unlocked state connected to the port reaches the threshold value is further predicted based on the predicted change in the current. Thus, the connector is more likely to be switched to the locked state at appropriate timing.

(Clause 13) The controller according to Clause 12 is configured to predict the time period until the current flowing through the connector reaches the threshold value based on a present value of the current flowing through the connector in the unlocked state connected to the port and a predicted rate of increase in the current. The prescribed time period according to Clause 12 is longer than a time period required for the connector device to switch the connector from the unlocked state to the locked state.

According to the above-described configuration, the time period until the current flowing through the connector in the unlocked state connected to the port reaches the threshold value is more likely to be predicted accurately. The above-described controller controls the connector device using the result of prediction. Thus, the connector is more likely to be switched to the locked state before the current flowing through the connector becomes larger than the threshold value.

According to a fourth aspect of the present disclosure, there is provided a connector lock control method as indicated below.

(Clause 14) The connector lock control method includes: determining whether a connector connected to a port of a movable body is in an unlocked state, when power transmission between the port and the connector connected to the port is being performed; determining whether a current flowing through the connector connected to the port is equal to or larger than a threshold value, when the power transmission is being performed; and switching the connector to a locked state when the connector connected to the port is in the unlocked state and the current flowing through the connector is equal to or larger than the threshold value.

Similarly to the movable body according to Clause 1 as described above, the above-described connector lock control method also makes it possible to more reliably suppress a flow of a large current to the connector in the unlocked state connected to the port of the movable body in power transmission performed by the movable body.

According to a fifth aspect of the present disclosure, there is provided a connector lock control method as indicated below.

(Clause 15) The connector lock control method includes: determining whether a connector connected to a port of a movable body is in an unlocked state, when power transmission between the port and the connector connected to the port is being performed; predicting a change in a current flowing through the connector in the unlocked state connected to the port, when the power transmission is being performed; determining, based on a result of the prediction, whether the current flowing through the connector reaches a threshold value within a time period from a present time point to a time point after a prescribed time period elapses; and switching the connector to a locked state when it is determined that the current flowing through the connector reaches the threshold value within the time period.

Similarly to the controller according to Clause 12 as described above, the above-described connector lock control method also makes it possible to more reliably suppress a flow of a large current to the connector in the unlocked state connected to the port of the movable body in power transmission performed by the movable body.

### ADVANTAGEOUS EFFECTS OF INVENTION

According to the present disclosure, it is possible to more reliably suppress a flow of a large current to a connector in an unlocked state connected to a port of a movable body in power transmission performed by the movable body.

### BRIEF DESCRIPTION OF DRAWINGS

Fig. 1 shows a vehicle according to a first embodiment.
Fig. 2 shows an example of a configuration of a charger-discharger included in the vehicle according to the first embodiment.
Fig. 3 is a diagram for illustrating how a port and a connector are connected according to the first embodiment.
Fig. 4 shows a modification of the mechanism shown in Fig. 3.
Fig. 5 is a flowchart showing connector lock control according to the first embodiment.
Fig. 6 is a time chart showing an operation example of the vehicle according to the first embodiment.
Fig. 7 is a flowchart showing connector lock control according to a second embodiment.
Fig. 8 is a time chart showing an operation example of a vehicle according to the second embodiment.
Fig. 9 is a flowchart showing connector lock control according to a third embodiment.
Fig. 10 is a diagram for illustrating processing for predicting a change in a current flowing through a connector in the connector lock control according to the third embodiment.
Fig. 11 is a flowchart showing connector lock control according to a fourth embodiment.
Fig. 12 is a flowchart showing connector lock control according to a fifth embodiment.
Fig. 13 shows a vehicle according to a sixth embodiment.
Fig. 14 is a flowchart showing connector lock control according to the sixth embodiment.
Fig. 15 is a flowchart showing connector lock control according to a seventh embodiment.
Fig. 16 shows a first example of a system in which external charging is performed.
Fig. 17 shows a second example of a system in which external charging is performed.

### DESCRIPTION OF EMBODIMENTS

Embodiments of the present disclosure will be described in detail with reference to the drawings. In the drawings, the same or corresponding portions are denoted by the same reference characters and description thereof will not be repeated.

### [First Embodiment]

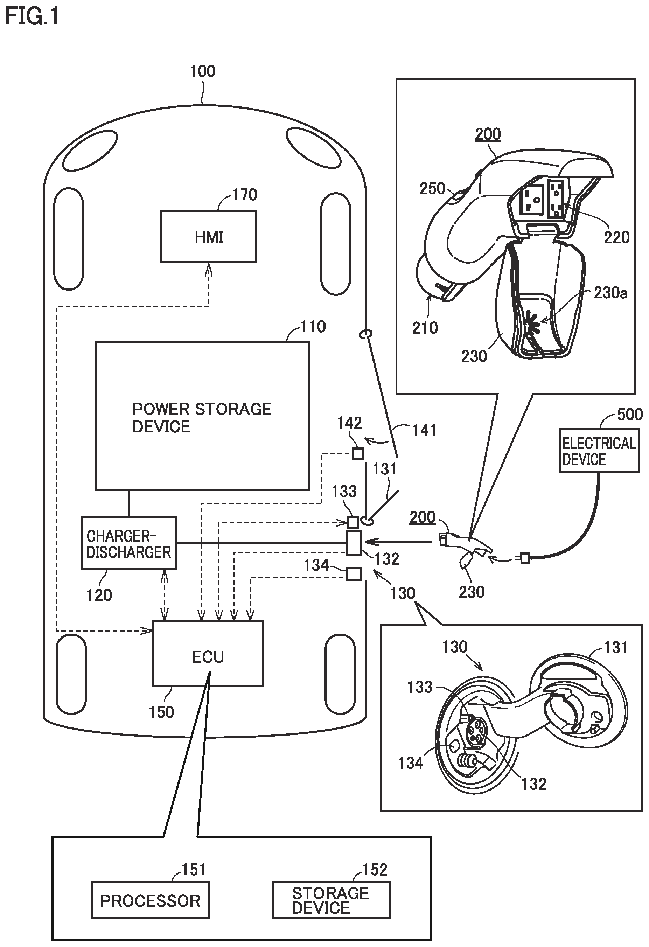

Fig. 1 shows a vehicle according to a first embodiment. Referring to Fig. 1, a vehicle 100 includes a power storage device 110, a charger-discharger 120, a connection device 130, an ECU 150, and an HMI (Human Machine Interface) 170. "ECU" stands for Electronic Control Unit. Vehicle 100 is configured to be movable with electric power stored in power storage device 110. The electric power output from power storage device 110 is, for example, supplied to a not-shown motor for traveling. Such a motor converts the electric power into torque to rotate a driving wheel of vehicle 100. Vehicle 100 is, for example, a battery electric vehicle (BEV) that does not include an internal combustion engine. Without being limited as such, vehicle 100 may be a plug-in hybrid electric vehicle (PHEV) including an internal combustion engine, or may be another electrically driven vehicle (xEV).

Power storage device 110 includes, for example, a secondary battery such as a lithium ion battery, a nickel-metal hydride battery or a sodium ion battery. The secondary battery may be a liquid-type secondary battery, or may be an all-solid-state secondary battery. A plurality of secondary batteries may form a battery pack. Instead of the secondary battery, an electric double layer capacitor may be employed.

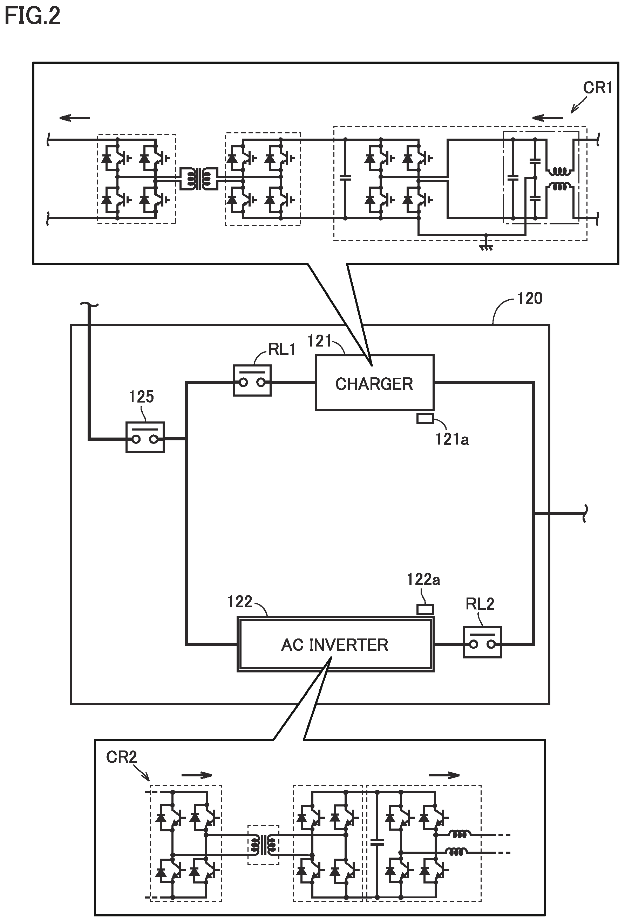

Fig. 2 shows an example of a configuration of charger-discharger 120. Referring to Fig. 2 together with Fig. 1, between connection device 130 and power storage device 110, charger-discharger 120 includes a charger 121 and an AC inverter 122 connected in parallel with each other. Charger 121 is configured to charge power storage device 110. Specifically, charger 121 converts AC power supplied from the outside of vehicle 100 to a port 132 of connection device 130 into DC power (AC/DC conversion), and outputs the DC power to power storage device 110. AC inverter 122 is configured to discharge electric power of power storage device 110 to the outside of vehicle 100. Specifically, AC inverter 122 converts DC power supplied from power storage device 110 into AC power (DC/AC conversion), and outputs the AC power to port 132 of connection device 130.

A charging relay RL1 is provided between charger 121 and power storage device 110. Charging relay RL1 switches between connection and disconnection of a charging path extending from charger 121 to power storage device 110. A discharging relay RL2 is provided between AC inverter 122 and connection device 130. Discharging relay RL2 switches between connection and disconnection of a discharging path extending from AC inverter 122 to connection device 130. A charging/discharging relay 125 is provided between each of charger 121 and AC inverter 122 and power storage device 110. Charging/discharging relay 125 switches between connection and disconnection of an electric path that connects charger-discharger 120 and power storage device 110.

Charger 121 converts AC power input from the connection device 130 side into DC power, and outputs the DC power to the power storage device 110 side. For example, charger 121 includes a circuit CR1. Circuit CR1 includes an insulating circuit, an input circuit (e.g., a full bridge circuit, a filter circuit, and a smoothing capacitor) disposed on the input side of the insulating circuit, and an output circuit (e.g., a full bridge circuit) disposed on the output side of the insulating circuit. Each of the full bridge circuits includes four switching elements. Each of the switching elements included in circuit CR1 is controlled by ECU 150. The circuit configuration shown in Fig. 2 is merely an example and can be changed as appropriate. Any circuit configuration from a known vehicle-mounted charger may be employed.

AC inverter 122 converts DC power input from the power storage device 110 side into AC power, and outputs the AC power to the connection device 130 side. For example, AC inverter 122 includes a circuit CR2. Circuit CR2 includes an insulating circuit, an input circuit (e.g., a full bridge circuit) disposed on the input side of the insulating circuit, and an output circuit (e.g., a full bridge circuit, a reactor, and a smoothing capacitor) disposed on the output side of the insulating circuit. Each of the full bridge circuits includes four switching elements. Each of the switching elements included in circuit CR2 is controlled by ECU 150. The circuit configuration shown in Fig. 2 is merely an example and can be changed as appropriate. Any circuit configuration from a known vehicle-mounted inverter may be employed.

Monitoring units 121a and 122a are provided in charger 121 and AC inverter 122, respectively. Monitoring units 121a and 122a include various sensors that detect states (e.g., voltages, currents, and temperatures) of charger 121 and AC inverter 122, respectively, and output results of detection to ECU 150.

Referring again to Fig. 1, connection device 130 includes a lid 131, port 132, a lock driving device 133, and an operation unit 134. Operation unit 134 is configured to be operable from the outside of vehicle 100. Operation unit 134 may include at least one of a physical switch (e.g., a button-type or slide-type switch) and a touch-panel-type operation panel. When a user operates operation unit 134, a signal corresponding to this operation is transmitted from operation unit 134 to ECU 150.

Port 132 is disposed in an opening provided in a vehicle body of vehicle 100. Lid 131 opens and closes the opening. Lid 131 is configured to be openable and closable from the outside of vehicle 100. Port 132 is used in a state where lid 131 is open. Port 132 is configured such that a connector (e.g., a discharging connector 200) for power transmission is attachable thereto and detachable therefrom. Port 132 includes a power terminal (a terminal for power transmission) and a connector detection terminal. The potential of the connector detection terminal varies in accordance with the presence or absence of connector connection. The potential of the connector detection terminal (a signal indicating whether the connector is connected to port 132) is input to ECU 150.

Lock driving device 133 is configured to switch between a locked state and an unlocked state of the connector connected to port 132 in accordance with a control command from ECU 150. For example, disconnection of the connector in the locked state from port 132 is restricted. Disconnection of the connector in the unlocked state from port 132 is permitted. In the present embodiment, lock driving device 133 and ECU 150 function as an example of "first lock device" according to the present disclosure. Without being limited as such, a controller dedicated to the first lock device may form one unit together with the other components of the first lock device.

Port 132 functions as an inlet (charging port) and an outlet (discharging port). Vehicle 100 is configured to perform power transmission using port 132. Specifically, vehicle 100 is configured to be capable of performing charging of power storage device 110 with electric power from the outside of vehicle 100 (hereinafter referred to as "external charging") and power feeding from power storage device 110 to the outside of vehicle 100 (hereinafter referred to as "external power feeding"). In the external charging, electric power is input from the outside of vehicle 100 to power storage device 110 through port 132. In the external power feeding, electric power is output from power storage device 110 to the outside of vehicle 100 through port 132.

Vehicle 100 performs the external power feeding in a state where discharging connector 200 is connected to port 132. In the present embodiment, vehicle 100 performs V2L (Vehicle to Load) as the external power feeding. The V2L is power transmission in which direct power feeding from a vehicle to an electrical device is performed. Discharging connector 200 is configured to be connectable to a power load 500 (electrical device). Specifically, discharging connector 200 has a first end 210 (input end) and a second end 220 (output end). First end 210 is configured to be connectable to port 132. Second end 220 includes an electrical outlet to and from which a plug of power load 500 is attachable and detachable. In the example shown in Fig. 1, second end 220 has three electrical outlets. However, the number of the electrical outlets can be changed and may be one.

Power load 500 includes the electrical device (device main body) and a power supply cord connecting to the electrical device. Power load 500 (electrical device) becomes ready for use when power load 500 is supplied with prescribed AC power. Examples of power load 500 include a lighting device, a heating appliance, a cooking utensil, a television, and a refrigerator. Second end 220 includes the electrical outlet to which the plug of the power supply cord of power load 500 is connectable. Discharging connector 200 further includes a cover 230 configured to be capable of opening and closing second end 220. Cover 230 covers second end 220 in a closed state, and exposes second end 220 in an open state. Cover 230 is provided with a hole 230a through which cords are inserted. Hole 230a receives a plurality of cords. Even in a state where three power supply cords are inserted through hole 230a and plugs thereof are inserted into the respective electrical outlets of second end 220, cover 230 can be closed. In a state where cover 230 is closed, exposure of second end 220 to rain and wind is suppressed. Cover 230 is waterproof.

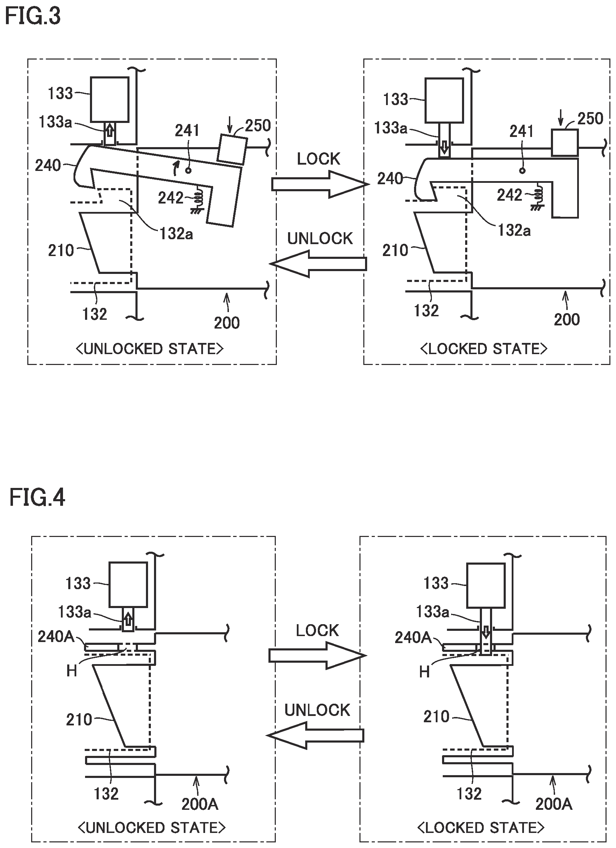

Fig. 3 is a diagram for illustrating how port 132 of vehicle 100 and discharging connector 200 are connected. Referring to Fig. 3 together with Fig. 1, discharging connector 200 further includes a latch 240 and an unlatch button 250. Latch 240 is configured to engage with port 132 to fix (latch) discharging connector 200 to port 132. Latch 240 has a tip portion that can engage with an engagement portion 132a of port 132. Latch 240 is attached to a main body portion of discharging connector 200 through a spring 242 so as to be rotatable around a shaft 241. Latch 240 rotates in conjunction with unlatch button 250. Unlatch button 250 has the function of unlatching discharging connector 200 from port 132 and causing vehicle 100 (ECU 150) to sense a connector state (a connected state/a fitted state/an unfitted state). Lock driving device 133 includes a lock pin 133a and an actuator for actuating lock pin 133a. Lock driving device 133 displaces lock pin 133a in accordance with a control command from ECU 150. Attachment and detachment between port 132 and discharging connector 200 are performed when lock pin 133a is at an unlock position (in a state where lock pin 133a is retracted).

For example, when the user inserts first end 210 of discharging connector 200 into port 132 while pressing unlatch button 250, and thereafter, the user releases unlatch button 250, discharging connector 200 is connected to port 132. More specifically, discharging connector 200 and port 132 are fixed by latch 240 in a state of being electrically connected. This connector state corresponds to "connected state". **In** the connected state, first end 210 of discharging connector 200 is inserted into port 132, and all of the terminals of discharging connector 200 and port 132 are electrically connected, and discharging connector 200 is latched. When the user presses unlatch button 250 while discharging connector 200 is in the connected state and in the unlocked state, the tip portion of latch 240 is separated from engagement portion 132a against the biasing force of spring 242. As a result, as shown on the left side in Fig. 3, fixation by latch 240 is released. This connector state corresponds to "fitted state". In the fitted state, although discharging connector 200 is inserted into port 132 and all of the terminals of discharging connector 200 and port 132 are electrically connected, discharging connector 200 is not latched. When the user pulls out discharging connector 200 from port 132 in the fitted state, the connector state enters "unfitted state". The unfitted state is a state that is neither the connected state nor the fitted state. When the connector state is the connected state or the fitted state, traveling of vehicle 100 is prohibited by ECU 150. When the connector state is the fitted state or the unfitted state, application of a voltage from power storage device 110 to port 132 is restricted (e.g., prohibited).

When discharging connector 200 is in the connected state and in the unlocked state, disconnection of discharging connector 200 from port 132 is permitted. Therefore, discharging connector 200 can be switched to the unfitted state as described above. However, lock driving device 133 can switch discharging connector 200 in the connected state to the locked state. For example, when lock driving device 133 drives lock pin 133a to the discharging connector 200 side, discharging connector 200 connected to port 132 is switched to the locked state as shown on the right side in Fig. 3. Lock pin 133a presses latch 240, whereby rotation of latch 240 is restricted. When discharging connector 200 is switched to the locked state, unlatching by unlatch button 250 is restricted (e.g., prohibited). As a result, disconnection of discharging connector 200 from port 132 is restricted.

The mechanism of lock driving device 133 that switches between the locked state and the unlocked state of discharging connector 200 is not limited to the mechanism shown in Fig. 3 and can be changed as appropriate. Fig. 4 shows a modification of the mechanism shown in Fig. 3. Referring to Fig. 4, in the present modification, discharging connector 200 has a cylindrical guide portion 240A that surrounds first end 210, instead of latch 240. Guide portion 240A has a hole H formed at a position corresponding to lock pin 133a. When lock pin 133a is at the unlock position, lock pin 133a is not inserted through hole H as shown on the left side in Fig. 4. In this state, disconnection of discharging connector 200 from port 132 is permitted. When lock driving device 133 drives lock pin 133a to the discharging connector 200 side, lock pin 133a is inserted through hole H as shown on the right side in Fig. 4. As a result, discharging connector 200 connected to port 132 is switched to the locked state. In the locked state, the sliding movement of discharging connector 200 is restricted, whereby disconnection of discharging connector 200 from port 132 is restricted (e.g., prohibited).

Referring again to Fig. 1, vehicle 100 further includes a door 141 for getting on and off vehicle 100, and a lock driving device 142. Lock driving device 142 includes a sensor that detects a state (open/close) of door 141, and switches between a locked state and an unlocked state of door 141. Door 141 in the locked state is maintained in a closed state and is restricted from being opened. Door 141 in the unlocked state is not restricted from being opened and closed, and is permitted to be opened. Although not shown, a key device that accepts a key operation from the outside of vehicle 100 is provided in a part (e.g., door 141 or a pillar) of the vehicle body of vehicle 100. Lock driving device 142 switches between the locked state and the unlocked state of door 141 in response to the key operation performed on the key device. The key operation may be an operation by a mechanical key, or may be an operation by a remote key. In addition to or instead of the key operation, the key device may accept an input of authentication information. When authentication using the key device succeeds, lock driving device 142 may switch door 141 to the unlocked state. Although Fig. 1 shows only one door 141, vehicle 100 includes a plurality of doors 141. Lock driving device 142 is provided for each door 141. Door 141 is, for example, opened and closed when the user gets on and off vehicle 100. In the present embodiment, lock driving device 142 and ECU 150 function as an example of "second lock device" according to the present disclosure. Without being limited as such, a controller dedicated to the second lock device may form one unit together with the other components of the second lock device.

HMI 170 includes an input device and a display device placed in a vehicle compartment. HMI 170 may include a touch panel display. The input device may include an operation unit (e.g., a button) provided on a handle. The input device may include a smart speaker that accepts an audio input. The input device outputs a signal corresponding to an input from the user to ECU 150. The display device may include a meter panel and/or a head-up display. HMI 170 may further include a recognition device that recognizes a state of the user. The recognition device may include a camera that acquires an image inside the vehicle compartment. When the recognition device recognizes a prescribed sign (e.g., a hand sign such as a V sign) by the user, a signal corresponding to the recognized sign is output from HMI 170 to ECU 150. According to such a recognition device, the user can operate the vehicle-mounted devices by giving a sign to HMI 170 using his/her hand or the like.

HMI 170 accepts a door lock operation, a door unlock operation, a connector lock operation, and a connector unlock operation from the user. The door lock operation and the door unlock operation are operations that request ECU 150 to perform door lock (switching door 141 to the locked state) and to perform door unlock (switching door 141 to the unlocked state), respectively. The connector lock operation and the connector unlock operation are operations that request ECU 150 to perform connector lock (switching discharging connector 200 in the connected state to the locked state) and to perform connector unlock (switching discharging connector 200 in the connected state to the unlocked state), respectively. ECU 150 controls lock driving device 133 and lock driving device 142 in response to an operation from the user.

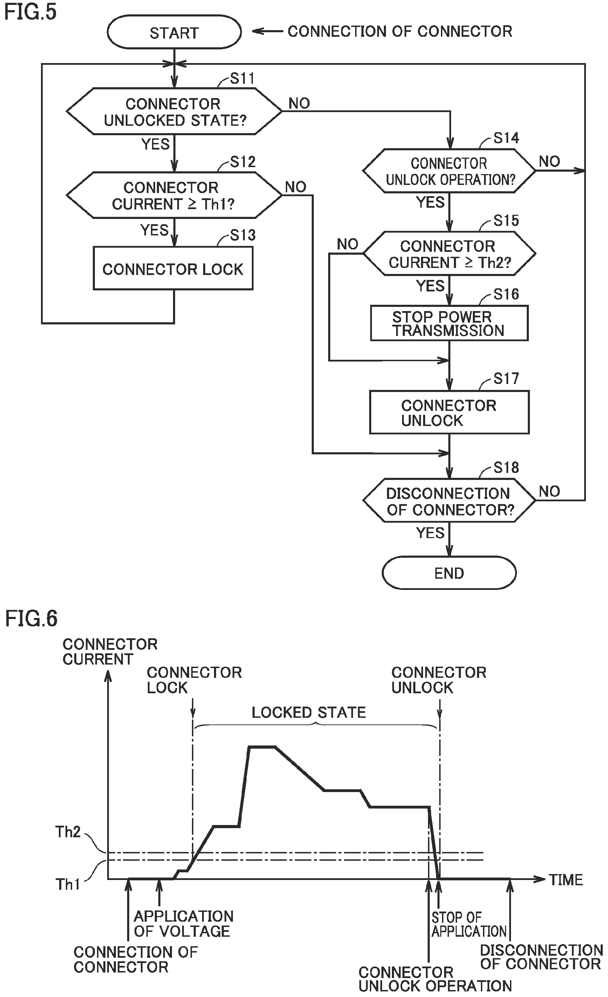

ECU 150 includes a processor 151 and a storage device 152. Storage device 152 is configured to be capable of saving the stored information. Storage device 152 stores a program and various types of information to be used for the program. In the present embodiment, various types of control (e.g., control shown in Fig. 5 described below) are performed by execution of the program stored in storage device 152 by processor 151. However, such processing may be performed only by hardware (electronic circuitry) without using software.

When discharging connector 200 is connected to port 132 of vehicle 100 in a parked state, vehicle 100 can perform the V2L. In the V2L, ECU 150 switches each of charging/discharging relay 125 and discharging relay RL2 to the closed state (connected state) and charging relay RL1 to the open state (disconnected state). Then, ECU 150 controls charger-discharger 120 such that an AC voltage having a prescribed frequency and a prescribed magnitude is applied to each electrical outlet of second end 220 of discharging connector 200 connected to port 132. The magnitude and the frequency of the AC voltage can be set as desired. The magnitude of the voltage may be about 100 V or about 200 V. The frequency may be about 50 Hz or about 60 Hz. Different AC voltages may be output to the respective electrical outlets.

In the V2L, electric power stored in power storage device 110 is supplied from discharging connector 200 connected to port 132 to the power load connected to the electrical outlet of discharging connector 200. DC power output from power storage device 110 is converted into AC power and the AC power is supplied to each electrical outlet of discharging connector 200 (second end 220). For example, when power load 500 is connected to any one of the electrical outlets of discharging connector 200, power load 500 becomes ready for actuation with the electric power supplied from the electrical outlet. Although a voltage and a frequency of the AC power output from the electrical outlet of discharging connector 200 can be controlled by ECU 150, a current thereof varies in accordance with a state of the power load connected to the electrical outlet. When the power loads are connected to the plurality of electrical outlets of discharging connector 200 (second end 220), respectively, the current varies in accordance with a usage status of each of these power loads. For example, as the electric power requested by each power load increases, the current output from vehicle 100 to discharging connector 200 also increases. Conversely, when any one of the power loads connected to discharging connector 200 is switched from an actuated state to a stop state, the current supplied from vehicle 100 to discharging connector 200 decreases.

Hereinafter, a current flowing through the connector (e.g., discharging connector 200) connected to port 132 will be referred to as "connector current". The connector current in the above-described V2L corresponds to a current output from port 132 of vehicle 100 to discharging connector 200. In the V2L, although execution/stop of power feeding can be controlled on the vehicle side, the magnitude of the connector current cannot be adjusted on the vehicle side. Therefore, the connector current may increase when discharging connector 200 is in the unlocked state. When large-current power transmission is performed in discharging connector 200 in the unlocked state, the power transmission tends to become unstable due to an influence of a terminal connection state, noise or the like. In addition, when discharging connector 200 is separated from port 132 in a state of the large connector current, port 132 and discharging connector 200 tend to be damaged by the large current. Thus, the first lock device (lock driving device 133 and ECU 150) according to the present embodiment is configured to switch discharging connector 200 to the locked state when discharging connector 200 connected to port 132 is in the unlocked state and the connector current (current flowing through discharging connector 200) is larger than a first threshold value. Specifically, when discharging connector 200 is connected to port 132, ECU 150 starts a process flow shown in Fig. 5. Fig. 5 is a flowchart showing connector lock control according to the first embodiment. "S" in the flowchart represents a step.

Referring to Fig. 5 together with Fig. 1, in S11, ECU 150 determines whether discharging connector 200 connected to port 132 is in the unlocked state. When discharging connector 200 is in the unlocked state (YES in S11), ECU 150 determines in S12 whether the connector current (current flowing through discharging connector 200) is equal to or larger than the prescribed first threshold value (hereinafter denoted as "Th1"). In the above-described V2L, a power feeding current detected by monitoring unit 122a corresponds to the connector current. When the connector current is equal to or larger than Th1 (YES in S12), ECU 150 performs connector lock (switching from the unlocked state to the locked state) of discharging connector 200 in S13. Specifically, ECU 150 controls lock driving device 133 to switch discharging connector 200 to the locked state. Thereafter, the process returns to S11.

When discharging connector 200 is in the locked state (NO in S11), ECU 150 determines in S14 whether the prescribed connector unlock operation has been performed. ECU 150 according to the present embodiment recognizes a prescribed operation to be performed on operation unit 134 (e.g., an operation of pressing the button) and a prescribed operation to be performed on HMI 170 as the connector unlock operation. Without being limited as such, the connector unlock operation can be set as desired. One operation may serve as the connector unlock operation and the door unlock operation.

When the connector unlock operation has been performed (YES in S14), ECU 150 determines in S15 whether the connector current is equal to or larger than a prescribed second threshold value (hereinafter denoted as "Th2"). Each of Th1 and Th2 can be set as desired. For example, each of Th1 and Th2 may be equal to or larger than 5 A and less than 16 A, and may be approximately 15 A. In the present embodiment, Th1 is smaller than Th2. This makes it more likely to perform connector lock. Without being limited as such, Th1 and Th2 may be the same. Alternatively, Th1 may be larger than Th2.

When the connector current is equal to or larger than Th2 (YES in S15), ECU 150 stops the power transmission in S16. Specifically, ECU 150 stops the power transmission (power feeding for the V2L) by, for example, decreasing the voltage by AC inverter 122, and thereafter, switches discharging relay RL2 to the open state. As a result, the connector current becomes 0 A. Next, in S17, ECU 150 performs connector unlock (switching from the locked state to the unlocked state) of discharging connector 200. Specifically, ECU 150 controls lock driving device 133 to switch discharging connector 200 to the unlocked state. Thereafter, the process proceeds to S18.

When the connector current is less than Th2 (NO in S15), ECU 150 performs connector unlock of discharging connector 200 in S17, without performing the processing for stopping the power transmission (S16). Thereafter, the process proceeds to S18. When discharging connector 200 is in the unlocked state and the connector current is less than Th1 (NO in S12), the process also proceeds to S18.

In S18, ECU 150 determines whether discharging connector 200 has been disconnected from port 132. When discharging connector 200 is connected to port 132 (NO in S18), the process returns to S11. Then, when discharging connector 200 is disconnected from port 132 (YES in S18), the process flow shown in Fig. 5 ends.

Regardless of whether vehicle 100 is performing the power transmission, the process flow shown in Fig. 5 above is repeatedly performed during a time period from when discharging connector 200 is connected to port 132 to when discharging connector 200 is disconnected from port 132. For example, when a prescribed discharging start condition is satisfied in a state where discharging connector 200 is connected to port 132, ECU 150 controls charger-discharger 120 such that a voltage is applied to each electrical outlet of discharging connector 200. Then, when power load 500 is connected to the electrical outlet of discharging connector 200, vehicle 100 starts the external power feeding (V2L). Through the V2L, electric power to be consumed by power load 500 is supplied from power storage device 110 to power load 500 through port 132 and discharging connector 200. The discharging start condition may be satisfied when the user instructs ECU 150 to start discharging through HMI 170. Discharging connector 200 may further include a discharging start switch operated by the user to instruct vehicle 100 to start discharging. The discharging start condition may be satisfied when the user operates the discharging start switch. The connection of discharging connector 200 to port 132 may trigger the application of the voltage to each electrical outlet of discharging connector 200. When a prescribed discharging end condition is satisfied during the external power feeding for the V2L, the external power feeding (power transmission) ends. For example, the discharging end condition may be satisfied when the user instructs ECU 150 to end discharging. ECU 150 may end the power transmission with the method in accordance with S16 in Fig. 5.

Fig. 6 is a time chart showing an operation example of vehicle 100 according to the first embodiment. Referring to Fig. 6, when the user connects discharging connector 200 to port 132 of vehicle 100, the process flow shown in Fig. 5 above is started. Then, when the discharging start condition is satisfied, the voltage is applied to each electrical outlet of discharging connector 200. When the user inserts the plug of the power supply cable of power load 500 into any one of the electrical outlets of discharging connector 200, electric power to be consumed by power load 500 is supplied from vehicle 100 to power load 500. As a result, the power transmission (e.g., V2L) is started. Then, when the electric power consumed by power load 500 increases, the connector current increases and exceeds Th1. When the connector current becomes equal to or larger than Th1 (YES in S12), connector lock (S13) is performed. Thereafter, the processing for stopping the power transmission (S16) is performed in response to the connector unlock operation, and the connector current becomes smaller than Th2. Next, connector unlock (S17) is performed. Then, when the user disconnects discharging connector 200 from port 132, the process flow shown in Fig. 5 above ends.

As described above, the connector lock control method according to the first embodiment includes each processing shown in Fig. 5. A time period for which the connector lock control shown in Fig. 5 is performed includes a time period for which the power transmission is performed by vehicle 100. Specifically, when the discharging start condition is satisfied in a state where discharging connector 200 is connected to port 132 of vehicle 100, the voltage is applied to each electrical outlet of discharging connector 200. Then, when power load 500 is connected to the electrical outlet of discharging connector 200, the power transmission between port 132 and discharging connector 200 is performed (see Fig. 6). When the power transmission is being performed, it is determined in S11 in Fig. 5 whether the connector connected to port 132 is in the unlocked state. In addition, when the power transmission is being performed, it is determined in S12 in Fig. 5 whether the current flowing through the connector connected to port 132 is equal to or larger than the threshold value. When the connector connected to port 132 is in the unlocked state and the current flowing through the connector is equal to or larger than the threshold value, the connector is switched to the locked state in S13 in Fig. 5. According to such a connector lock control method, a flow of a large current to the connector in the unlocked state connected to port 132 of vehicle 100 in power transmission performed by vehicle 100 can be more reliably suppressed.

In addition, the first lock device (lock driving device 133 and ECU 150) according to the first embodiment is configured to switch the connector to the locked state when the connector connected to port 132 is in the unlocked state and the current flowing through the connector is larger than the first threshold value (YES in both of S11 and S12 in Fig. 5). According to such a configuration, a flow of a large current to the connector in the unlocked state connected to port 132 of vehicle 100 in power transmission performed by vehicle 100 can be more reliably suppressed.

When the unlock operation is performed in a state where the current flowing through the connector in the locked state connected to port 132 is smaller than the second threshold value (NO in S11, YES in S14, and NO in S15 in Fig. 5), the above-described first lock device switches the connector to the unlocked state. When the unlock operation is performed in a state where the current flowing through the connector in the locked state connected to port 132 is larger than the second threshold value (NO in S11 and YES in both of S14 and S15 in Fig. 5), the above-described first lock device decreases the current flowing through the connector to be smaller than the second threshold value, and thereafter, switches the connector to the unlocked state. According to the above-described configuration, a flow of a large current to the connector in the unlocked state can be suppressed and the connector can be switched to the unlocked state by the unlock operation.

In addition, port 132 of vehicle 100 is configured such that discharging connector 200 including the electrical outlet is attachable thereto and detachable therefrom. Vehicle 100 is configured to perform the V2L in a state where discharging connector 200 is connected to port 132. In the V2L, the current flowing through discharging connector 200 connected to port 132 varies in accordance with the state of the power load connected to the electrical outlet of discharging connector 200. According to such a configuration, a flow of a large current to discharging connector 200 in the unlocked state connected to port 132 can be suppressed and the V2L can be performed.

### [Second Embodiment]

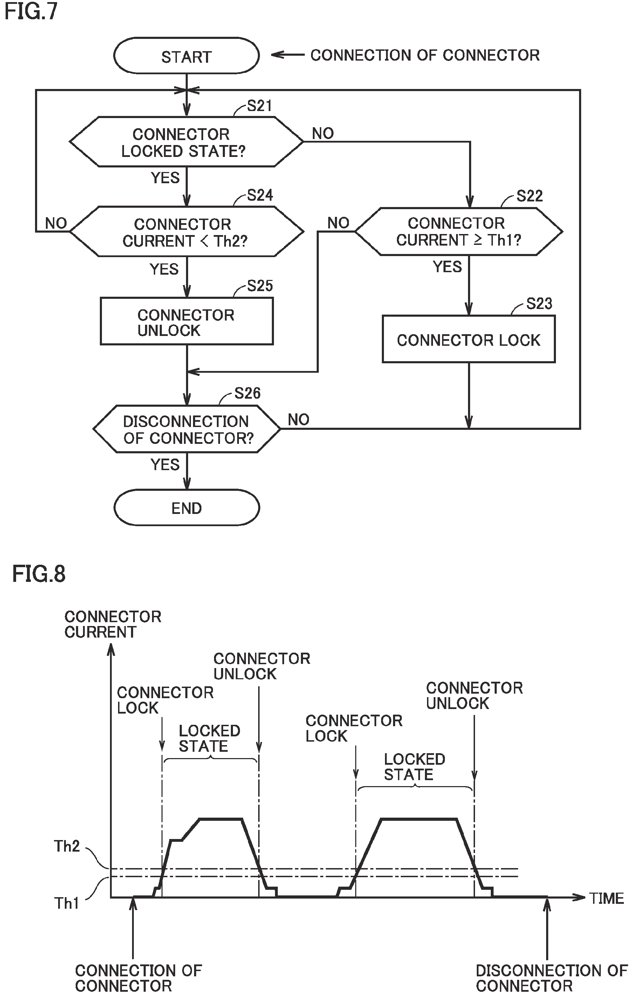

A second embodiment will be described below, with attention being directed to a difference from the first embodiment. In the present embodiment, ECU 150 performs a process flow shown in Fig. 7, instead of the process flow shown in Fig. 5. Fig. 7 is a flowchart showing connector lock control according to the second embodiment.

Referring to Fig. 7 together with Fig. 1, in S21, ECU 150 determines whether discharging connector 200 connected to port 132 is in the locked state. When discharging connector 200 is in the unlocked state (NO in S21), ECU 150 determines in S22 whether the connector current is equal to or larger than the first threshold value (Th1). When the connector current is equal to or larger than Th1 (YES in S22), ECU 150 performs connector lock of discharging connector 200 in S23. Thereafter, the process returns to S21.

When discharging connector 200 is in the locked state (YES in S21), ECU 150 determines in S24 whether the connector current is smaller than the second threshold value (Th2). When the connector current is equal to or larger than Th2 (NO in S24), the process returns to S21. On the other hand, when the connector current is smaller than the second threshold value (Th2) (YES in S24), ECU 150 performs connector unlock of discharging connector 200 in S25. Thereafter, the process proceeds to S26. When discharging connector 200 is in the unlocked state and the connector current is less than Th1 (NO in S22), the process also proceeds to S26.

In S26, ECU 150 determines whether discharging connector 200 has been disconnected from port 132. When discharging connector 200 is connected to port 132 (NO in S26), the process returns to S21. Then, when discharging connector 200 is disconnected from port 132 (YES in S26), the process flow shown in Fig. 7 ends.

Fig. 8 is a time chart showing an operation example of vehicle 100 according to the second embodiment. Referring to Fig. 8, when the user connects discharging connector 200 to port 132 of vehicle 100, the process flow shown in Fig. 7 above is started. Then, when the discharging start condition is satisfied, the voltage is applied to each electrical outlet of discharging connector 200. When the user inserts the plug of the power supply cable of power load 500 into any one of the electrical outlets of discharging connector 200, electric power to be consumed by power load 500 is supplied from vehicle 100 to power load 500. As a result, the power transmission (e.g., V2L) is started. Then, when the use of power load 500 is started and the electric power consumed by power load 500 increases, the connector current increases and exceeds Th1. When the connector current becomes equal to or larger than Th1 (YES in S22), connector lock (S23) is performed. Thereafter, when the use of power load 500 ends and the electric power consumed by power load 500 decreases, the connector current becomes smaller than Th2 (YES in S24). As a result, connector unlock (S25) is performed.

When power load 500 is disconnected from discharging connector 200 by the user, such that the power load is not connected to any electrical outlet of discharging connector 200, the connector current becomes 0 A. As a result, the power transmission ends. However, even in this state, the process flow shown in Fig. 7 above is continued. Specifically, S21, S22 and S26 are repeated. Thereafter, when the user again connects power load 500 to discharging connector 200 and starts to use power load 500, connector lock (S23) is performed as described above. The connector current varies in accordance with the usage status of power load 500, and connector lock (S23)/connector unlock (S25) is automatically performed in accordance with the connector current. When the user disconnects discharging connector 200 from port 132, with discharging connector 200 being in the unlocked state, the process flow shown in Fig. 7 above ends. Then, the application of the voltage from power storage device 110 to port 132 is also stopped.

As described above, the connector lock control method according to the second embodiment includes each processing shown in Fig. 7. The controller (ECU 150) according to the second embodiment controls lock driving device 133 (connector device) based on the connector current. When the connector connected to port 132 is in the unlocked state and the current flowing through the connector is larger than the first threshold value, the first lock device (lock driving device 133 and ECU 150) according to the second embodiment switches the connector to the locked state (S21 to S23). When the connector connected to port 132 is in the locked state and the current flowing through the connector is smaller than the second threshold value, the first lock device switches the connector to the unlocked state (S21, S24, S25). According to such a configuration, the connector tends to be disconnected from port 132 at the timing at which the current flowing through the connector is sufficiently decreased. In addition, since connector lock/connector unlock is automatically performed in accordance with the connector current without any user operation, the time and effort required for the user to release the connector lock can be saved.

### [Third Embodiment]

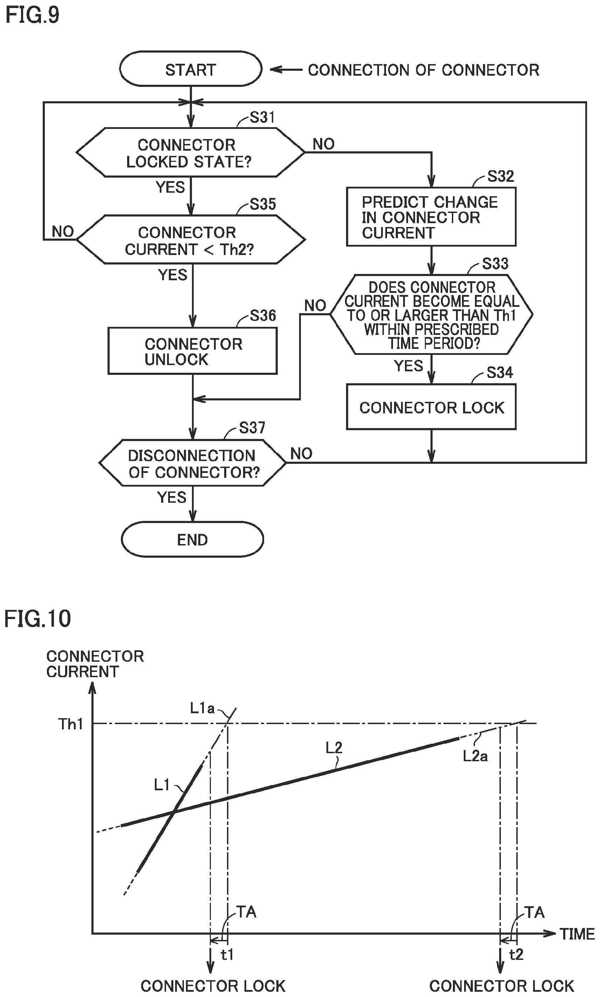

A third embodiment will be described below, with attention being directed to a difference from the first embodiment. In the present embodiment, ECU 150 performs a process flow shown in Fig. 9, instead of the process flow shown in Fig. 5. Fig. 9 is a flowchart showing connector lock control according to the third embodiment.

Referring to Fig. 9 together with Fig. 1, in S31, ECU 150 determines whether discharging connector 200 connected to port 132 is in the locked state. When discharging connector 200 is in the unlocked state (NO in S31), ECU 150 predicts a change in the connector current in S32. ECU 150 may predict a rate of change (e.g., a rate of increase) in the connector current in the future, based on the latest data of the connector current (e.g., transition of the connector current). Next, in S33, based on a result of prediction of the change in the connector current (S32), ECU 150 determines whether the connector current becomes equal to or larger than the first threshold value (Th1) within a time period from the present time point to a time point after a prescribed time period (hereinafter denoted as "TA") elapses. When it is determined that the connector current becomes equal to or larger than Th1 within the time period from the present time point to the time point after TA elapses (YES in S33), ECU 150 performs connector lock of discharging connector 200 in S34. As a result, discharging connector 200 is switched to the locked state before the connector current becomes larger than Th1. Fig. 10 is a diagram for illustrating the processing in S32 and S33.

Referring to Fig. 10, when the connector current changes as indicated by a line L1, for example, ECU 150 predicts in S32 in Fig. 9 that the connector current in the future will change as indicated by a line L1a. Next, in S33 in Fig. 9, ECU 150 predicts a time t1 at which the connector current reaches Th1. In the present embodiment, ECU 150 predicts time t1 based on a present value of the connector current (present current value) and the rate of increase in the connector current predicted in S32. According to such a method, a time period from the present time point to time t1 (time period until the connector current reaches Th1) is more likely to be predicted accurately. Next, ECU 150 determines whether the time period from the present time point to time t1 is shorter than TA. The time period from the present time point to time t1 being shorter than TA means that the connector current becomes equal to or larger than Th1 within the time period from the present time point to the time point after TA elapses. The time period from the present time point to time t1 becomes shorter as the connector current increases. When the time period from the present time point to time t1 becomes shorter than TA (YES in S33), connector lock (S34) is performed. That is, connector lock is performed at the timing that is earlier by TA than time t1.

When the connector current changes as indicated by a line L2, ECU 150 predicts in S32 in Fig. 9 that the connector current in the future will change as indicated by a line L2a. A rate of increase in the connector current indicated by line L2 is lower than the rate of increase in the connector current indicated by line L1. Next, in S33 in Fig. 9, ECU 150 predicts a time t2 at which the connector current reaches Th1. When a time period from the present time point to time t2 becomes shorter than TA (YES in S33), connector lock (S34) is performed. That is, connector lock is performed at the timing that is earlier by TA than time t2. The connector current at the timing that is earlier by TA than time t2 is larger than the connector current at the timing that is earlier by TA than time t1. According to the connector lock control in the present embodiment, connector lock is more likely to be performed at appropriate timing in accordance with the rate of increase in the connector current.

In the present embodiment, a value obtained by adding a prescribed margin time period to a time period required for lock driving device 133 to switch discharging connector 200 from the unlocked state to the locked state is used as TA. That is, TA is longer than a time period from when lock driving device 133 starts connector lock to when lock driving device 133 completes connector lock. According to such TA (prescribed time period), discharging connector 200 is more likely to be switched to the locked state before the connector current becomes larger than Th1 (threshold value). Without being limited as such, TA can be set as desired.

Referring again to Fig. 9, when the processing in S34 is performed, the process returns to S31. When discharging connector 200 is in the locked state (YES in S31), ECU 150 determines in S35 whether the connector current is smaller than the second threshold value (Th2). When the connector current is equal to or larger than Th2 (NO in S35), the process returns to S31. On the other hand, when the connector current is smaller than the second threshold value (Th2) (YES in S35), ECU 150 performs connector unlock of discharging connector 200 in S36. Thereafter, the process proceeds to S37. When discharging connector 200 is in the unlocked state and it is determined that the connector current does not reach Th1 within the time period from the present time point to the time point after TA elapses (NO in S33), the process also proceeds to S37.

In S37, ECU 150 determines whether discharging connector 200 has been disconnected from port 132. When discharging connector 200 is connected to port 132 (NO in S37), the process returns to S31. Then, when discharging connector 200 is disconnected from port 132 (YES in S37), the process flow shown in Fig. 9 ends.

As described above, the connector lock control method according to the third embodiment includes each processing shown in Fig. 9. Specifically, when the discharging start condition is satisfied in a state where discharging connector 200 is connected to port 132 of vehicle 100, the voltage is applied to each electrical outlet of discharging connector 200. Then, when power load 500 is connected to the electrical outlet of discharging connector 200, the power transmission between port 132 and discharging connector 200 is performed. When the power transmission is being performed, it is determined in S31 in Fig. 9 whether the connector connected to port 132 is in the unlocked state. In addition, when the power transmission is being performed, the change in the current flowing through the connector in the unlocked state connected to port 132 is predicted in S32 in Fig. 9. In addition, in S33 in Fig. 9, based on the result of prediction in S32, it is determined whether the current flowing through the connector reaches the threshold value within the time period from the present time point to the time point after the prescribed time period elapses. When it is determined that the current flowing through the connector reaches the threshold value within the above-described time period, the connector is switched to the locked state in S34 in Fig. 9. According to such a connector lock control method, a flow of a large current to the connector in the unlocked state connected to port 132 of vehicle 100 in power transmission performed by vehicle 100 can be more reliably suppressed.

In addition, the controller (ECU 150) according to the third embodiment controls lock driving device 133 (connector device) based on the connector current. Specifically, ECU 150 is configured to predict the change in the current flowing through the connector in the unlocked state connected to port 132, and control, based on the result of prediction, lock driving device 133 to switch the connector to the locked state before the current flowing through the connector becomes larger than the threshold value (S31 to S34). According to such a configuration, the connector can be switched to the locked state before the current flowing through the connector in the unlocked state connected to port 132 becomes larger than the threshold value.

### [Fourth Embodiment]

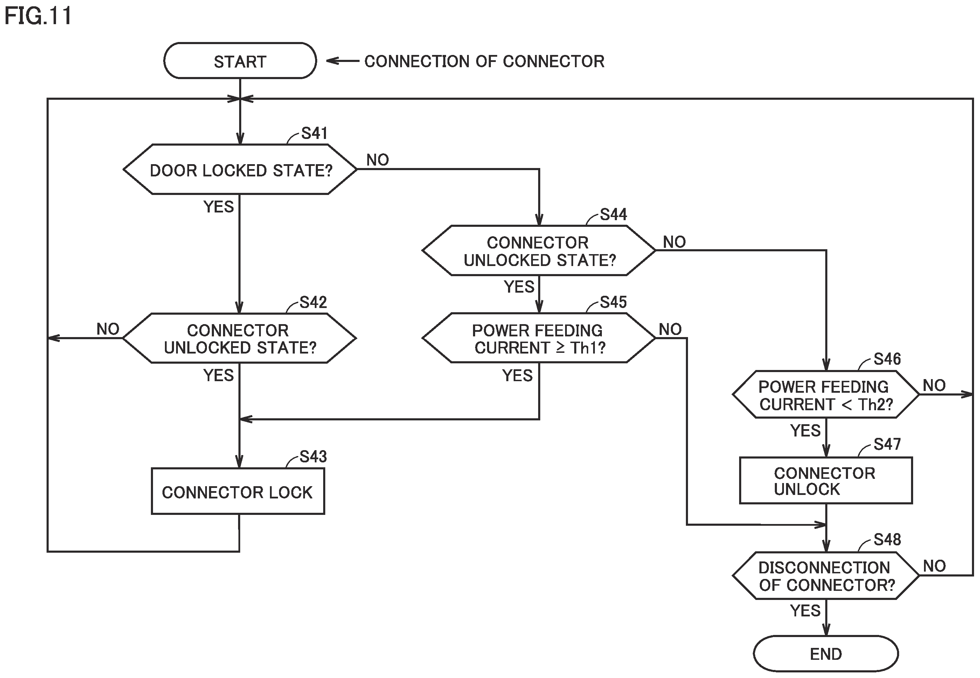

A fourth embodiment will be described below, with attention being directed to a difference from the first embodiment. In the present embodiment, ECU 150 performs a process flow shown in Fig. 11, instead of the process flow shown in Fig. 5. Fig. 11 is a flowchart showing connector lock control according to the fourth embodiment.

Referring to Fig. 11 together with Fig. 1, in S41, ECU 150 determines whether all of doors 141 included in vehicle 100 are in the locked state. When all of doors 141 of vehicle 100 are in the locked state (YES in S41), ECU 150 determines in S42 whether discharging connector 200 connected to port 132 is in the unlocked state. When discharging connector 200 is in the unlocked state (YES in S42), ECU 150 performs connector lock of discharging connector 200 in S43. Thereafter, the process returns to S41. When discharging connector 200 is in the locked state (NO in S42), the process also returns to S41.

When any one of doors 141 of vehicle 100 is in the unlocked state (NO in S41), ECU 150 determines in S44 whether discharging connector 200 connected to port 132 is in the unlocked state. When discharging connector 200 is in the unlocked state (YES in S44), the process proceeds to S45. When discharging connector 200 is in the locked state (NO in S44), the process proceeds to S46.

In S45, ECU 150 determines whether the connector current is equal to or larger than the first threshold value (Th1). When the connector current is equal to or larger than Th1 (YES in S45), ECU 150 performs connector lock in S43. Thereafter, the process returns to S41.

In S46, ECU 150 determines whether the connector current is smaller than the second threshold value (Th2). When the connector current is equal to or larger than Th2 (NO in S46), the process returns to S41. On the other hand, when the connector current is smaller than Th2 (YES in S46), ECU 150 performs connector unlock of discharging connector 200 in S47. Thereafter, the process proceeds to S48. When door 141 and discharging connector 200 are in the unlocked state and the connector current is less than Th1 (NO in S45), the process also proceeds to S48.

In S48, ECU 150 determines whether discharging connector 200 has been disconnected from port 132. When discharging connector 200 is connected to port 132 (NO in S48), the process returns to S41. Then, when discharging connector 200 is disconnected from port 132 (YES in S48), the process flow shown in Fig. 11 ends.

As described above, the connector lock control method according to the fourth embodiment includes each processing shown in Fig. 11. The first lock device (lock driving device 133 and ECU 150) according to the fourth embodiment is configured to switch the connector connected to port 132 to the unlocked state when a prescribed unlock condition is satisfied. The unlock condition includes a condition that the connector connected to port 132 is in the locked state (first requirement), a condition that a current flowing through this connector is smaller than the second threshold value (second requirement), and a condition that door 141 (door for getting on and off vehicle 100) of vehicle 100 is in the unlocked state (third requirement). That is, the unlock condition is satisfied when all of the first to third requirements are satisfied, and the unlock condition is not satisfied when any one of these requirements is not satisfied. Whether the first requirement is satisfied, whether the second requirement is satisfied, and whether the third requirement is satisfied are determined in S44, S46 and S41 in Fig. 11, respectively. When the unlock condition is satisfied (NO in both of S41 and S44 and YES in S46), connector unlock (S47) is performed. In such a configuration, unless door 141 is in the unlocked state, the first lock device does not switch discharging connector 200 to the unlocked state. When door 141 of vehicle 100 is in the unlocked state, there is a high possibility that the owner of vehicle 100 is near vehicle 100. Therefore, according to the above-described configuration, transition of discharging connector 200 to the unlocked state contrary to the intention of the owner of vehicle 100 is suppressed. Thus, discharging connector 200 is less likely to be stolen.

### [Fifth Embodiment]

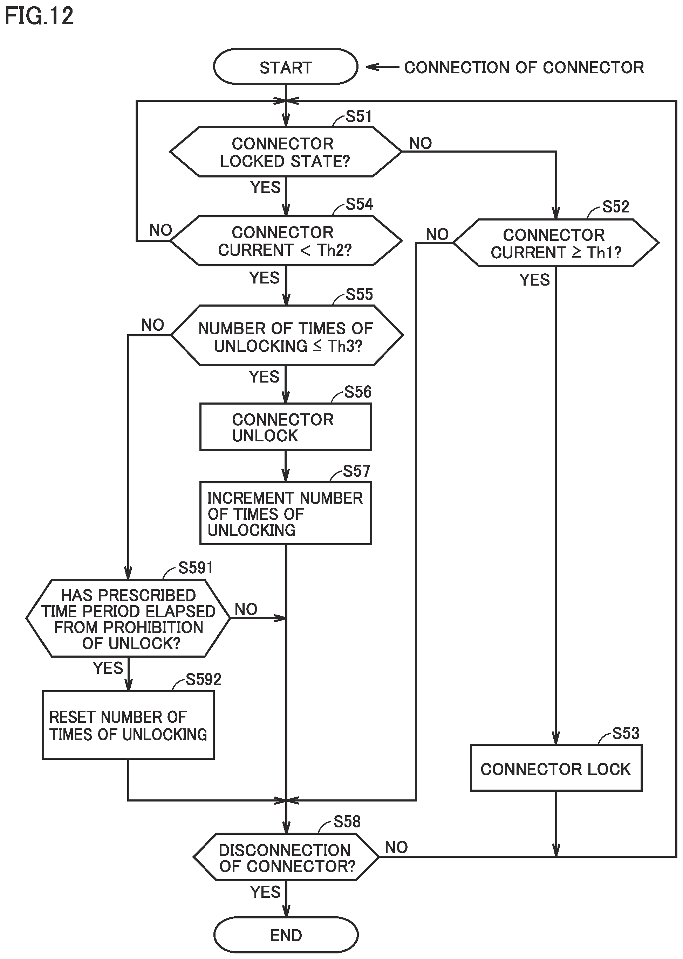

A fifth embodiment will be described below, with attention being directed to a difference from the first embodiment. In the present embodiment, ECU 150 performs a process flow shown in Fig. 12, instead of the process flow shown in Fig. 5. Fig. 12 is a flowchart showing connector lock control according to the fifth embodiment.

Referring to Fig. 12 together with Fig. 1, in S51, ECU 150 determines whether discharging connector 200 connected to port 132 is in the locked state. When discharging connector 200 is in the unlocked state (NO in S51), ECU 150 determines in S52 whether the connector current is equal to or larger than the first threshold value (Th1). When the connector current is equal to or larger than Th1 (YES in S52), ECU 150 performs connector lock of discharging connector 200 in S53. Thereafter, the process returns to S51.

When discharging connector 200 is in the locked state (YES in S51), ECU 150 determines in S54 whether the connector current is smaller than the second threshold value (Th2). When the connector current is equal to or larger than Th2 (NO in S54), the process returns to S51. On the other hand, when the connector current is smaller than Th2 (YES in S54), ECU 150 determines in S55 whether the number of times of switching between the locked state and the unlocked state of discharging connector 200 is equal to or smaller than a prescribed third threshold value (hereinafter denoted as "Th3"). In the present embodiment, the number of times of unlocking (number of times of switching from the locked state to the unlocked state) is employed as the above-described number of times of switching. As Th3, one or more times can be set as desired. Th3 may be approximately five times. Unless below-described connector unlock (S56) is performed, the number of times of unlocking is zero, and thus, in an initial stage, determination of YES is made in S55.

When the number of times of unlocking is equal to or smaller than Th3 (YES in S55), ECU 150 performs connector unlock of discharging connector 200 in S56. Next, in S57, ECU 150 increments the number of times of unlocking stored in storage device 152 (increases the number of times of unlocking by one). Thereafter, the process proceeds to S58. When discharging connector 200 is in the unlocked state and the connector current is less than Th1 (NO in S52), the process also proceeds to S58.

In S58, ECU 150 determines whether discharging connector 200 has been disconnected from port 132. When discharging connector 200 is connected to port 132 (NO in S58), the process returns to S51. When the number of times of switching between the locked state and the unlocked state of discharging connector 200 increases and the number of times of unlocking becomes larger than Th3 in a state where discharging connector 200 is connected to port 132 (NO in S55), the process proceeds to S591. In S591, ECU 150 determines whether a prescribed time period has elapsed since the number of times of unlocking reached Th3. When the prescribed time period has not elapsed since the number of times of unlocking reached Th3 (NO in S591), the process skips S56 and S57 and proceeds to S58. As a result, connector unlock is prohibited and discharging connector 200 is maintained in the locked state. Then, when the prescribed time period has elapsed since the number of times of unlocking reached Th3 (YES in S591), ECU 150 resets the number of times of unlocking stored in storage device 152 in S592. As a result, the number of times of unlocking returns to the initial value (zero) and the prohibition of connector unlock is lifted. Then, when discharging connector 200 is disconnected from port 132 (YES in S58), the process flow shown in Fig. 12 ends.

As described above, the connector lock control method according to the fifth embodiment includes each processing shown in Fig. 12. The first lock device (lock driving device 133 and ECU 150) according to the fifth embodiment is configured to switch the connector connected to port 132 to the unlocked state when a prescribed unlock condition is satisfied. The unlock condition includes a condition that the connector connected to port 132 is in the locked state (first requirement), a condition that the current flowing through the connector is smaller than the second threshold value (second requirement), and a condition that the number of times of switching between the locked state and the unlocked state of the connector is smaller than the prescribed number of times (fourth requirement). That is, the unlock condition is satisfied when all of the first requirement, the second requirement and the fourth requirement are satisfied, and the unlock condition is not satisfied when any one of these requirements is not satisfied. Whether the first requirement is satisfied, whether the second requirement is satisfied, and whether the fourth requirement is satisfied are determined in S51, S54 and S55 in Fig. 12, respectively. When the unlock condition is satisfied (YES in all of S51, S54 and S55), connector unlock (S56) is performed. **In** such a configuration, when the number of times of switching between the locked state and the unlocked state of the connector becomes larger than the prescribed number of times, the first lock device no longer switches the connector to the unlocked state. Therefore, switching between lock and unlock at high frequency can be suppressed. As a result, deterioration of the first lock device (particularly, degradation of the components of lock driving device 133) is suppressed.

The number of times of switching in the fourth requirement is not limited to the number of times of unlocking. For example, instead of the number of times of unlocking, the number of times of locking (number of times of switching from the unlocked state to the locked state) may be employed. Alternatively, a value obtained by adding the number of times of locking and the number of times of unlocking may be employed.

### [Sixth Embodiment]

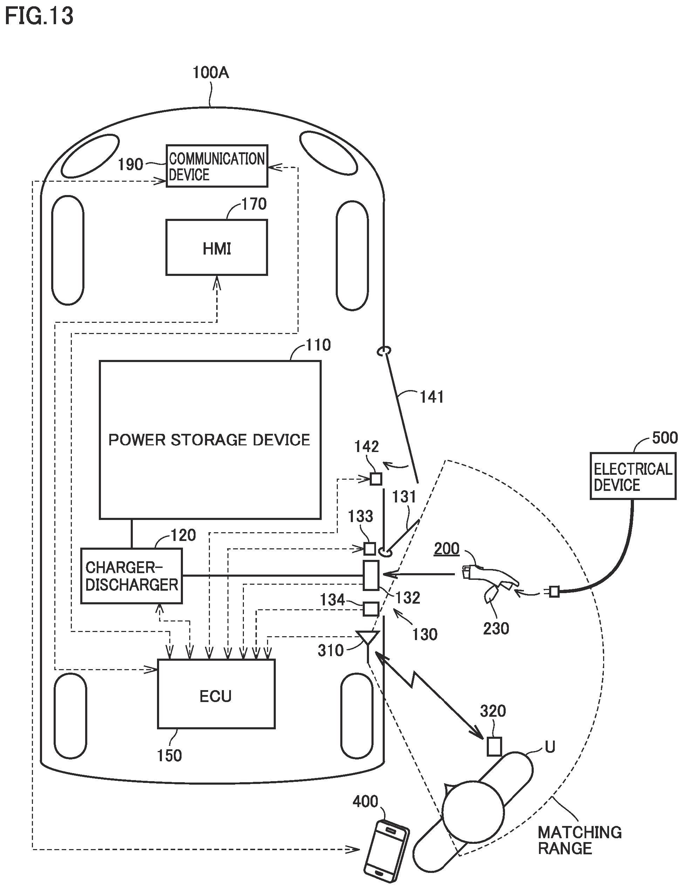

A sixth embodiment will be described below, with attention being directed to a difference from the first embodiment. A vehicle 100A according to the present embodiment has a configuration shown in Fig. 13, not the configuration shown in Fig. 1. Fig. 13 shows vehicle 100A according to the sixth embodiment. Vehicle 100A further includes an antenna 310 and a communication device 190. Antenna 310 is, for example, located in the vicinity of port 132. When an electronic key 320 is present within a range set around port 132 (hereinafter referred to as "matching range"), antenna 310 recognizes the presence of electronic key 320 through matching processing. When antenna 310 recognizes that electronic key 320 is present within the matching range, antenna 310 notifies ECU 150 about the presence of electronic key 320 within the matching range. Communication device 190 is configured to be capable of wirelessly communicating with a mobile terminal 400. ECU 150 wirelessly communicates with mobile terminal 400 through communication device 190. Mobile terminal 400 is, for example, a smartphone including a touch panel display. Without being limited as such, a laptop, a portable game console, a wearable device or the like can also be employed as mobile terminal 400. Electronic key 320 and mobile terminal 400 are carried by an owner U of vehicle 100A.

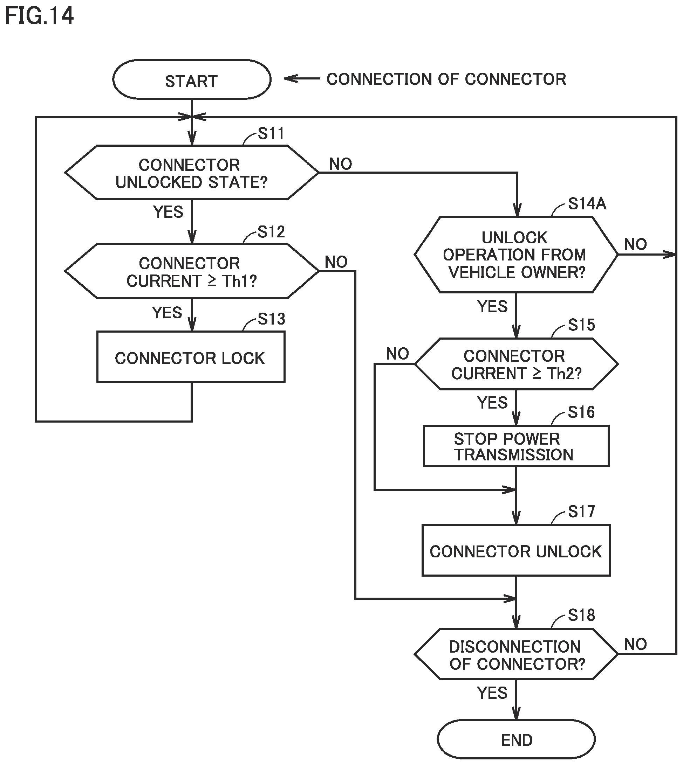

ECU 150 performs a process flow shown in Fig. 14, instead of the process flow shown in Fig. 5. Fig. 14 is a flowchart showing connector lock control according to the sixth embodiment. The process flow shown in Fig. 14 is the same as the process flow shown in Fig. 5 except that S14 (Fig. 5) is replaced with S14A.

Referring to Fig. 14 together with Fig. 13, in S14A, ECU 150 determines whether a connector unlock operation by owner U of vehicle 100A has been performed. The connector unlock operation recognized in S14A is an operation performed by owner U of vehicle 100A to switch discharging connector 200 to the unlocked state. An operation performed by a third party other than owner U of vehicle 100A is not recognized as the connector unlock operation in S14A.

Specifically, each of HMI 170 placed in the vehicle compartment and mobile terminal 400 carried by owner U is operated only by owner U. Therefore, when ECU 150 is notified by HMI 170 or mobile terminal 400 that the connector unlock operation has been performed, ECU 150 determines that the connector unlock operation by owner U has been performed. When the connector unlock operation has been performed on operation unit 134 in a state where electronic key 320 is present within the matching range, ECU 150 also determines that the connector unlock operation by owner U has been performed. On the other hand, an operation performed on operation unit 134 in a state where electronic key 320 is not present within the matching range is not recognized as the connector unlock operation in S14A.

When it is determined that the connector unlock operation by owner U of vehicle 100A has been performed (YES in S14A), the process proceeds to S15, and connector unlock (S17) of discharging connector 200 is performed. On the other hand, when it is determined that the connector unlock operation by owner U of vehicle 100A has not been performed (NO in S14A), the process returns to S11. In this case, connector unlock is not performed.

As described above, in the connector lock control according to the sixth embodiment, the operation performed by the third party other than owner U of vehicle 100A is not recognized as the unlock operation. Therefore, transition of the connector to the unlocked state contrary to the intention of owner U of vehicle 100A is suppressed. Thus, discharging connector 200 is less likely to be stolen.

### [Seventh Embodiment]

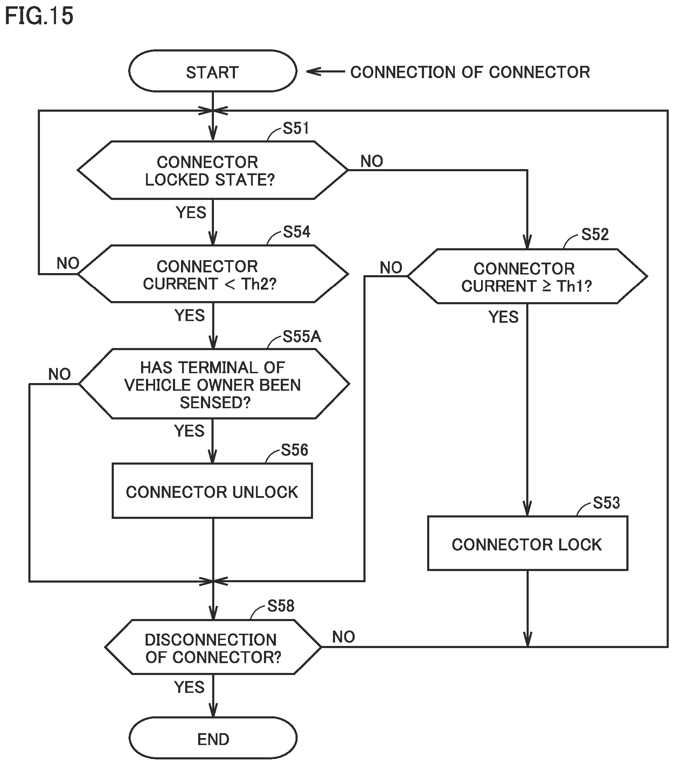

A seventh embodiment will be described below, with attention being directed to a difference from the sixth embodiment. In the present embodiment, ECU 150 of vehicle 100A (Fig. 13) performs a process flow shown in Fig. 15, instead of the process flow shown in Fig. 14. Fig. 15 is a flowchart showing connector lock control according to the seventh embodiment. The process flow shown in Fig. 15 is the same as the process flow shown in Fig. 12 except that S57, S591 and S592 are omitted and S55 (Fig. 5) is replaced with S55A.

Referring to Fig. 15 together with Fig. 13, in S55A, ECU 150 determines whether a terminal of owner U of vehicle 100A has been sensed. The terminal of owner U of vehicle 100A is, for example, electronic key 320. Antenna 310 functions as a sensing device that senses the terminal of owner U of vehicle 100A. When electronic key 320 has been sensed within the matching range by antenna 310 (YES in S55A), the process proceeds to S56. On the other hand, when electronic key 320 has not been sensed within the matching range (NO in S55A), the process proceeds to S58.

As described above, the connector lock control method according to the seventh embodiment includes each processing shown in Fig. 15. The first lock device (lock driving device 133 and ECU 150) according to the seventh embodiment is configured to switch the connector connected to port 132 to the unlocked state when a prescribed unlock condition is satisfied. The unlock condition includes a condition that the connector connected to port 132 is in the locked state (first requirement), a condition that the current flowing through this connector is smaller than the second threshold value (second requirement), and a condition that the terminal of owner U of vehicle 100A is sensed by the sensing device (fifth requirement). That is, the unlock condition is satisfied when all of the first requirement, the second requirement and the fifth requirement are satisfied, and the unlock condition is not satisfied when any one of these requirements is not satisfied. Whether the first requirement is satisfied, whether the second requirement is satisfied, and whether the fifth requirement is satisfied are determined in S51, S54 and S55A in Fig. 15, respectively. When the unlock condition is satisfied (YES in all of S51, S54 and S55A), connector unlock (S56) is performed. In such a configuration, unless the terminal of owner U of vehicle 100A is sensed, the first lock device does not switch the connector to the unlocked state. When the terminal of owner U of vehicle 100A is sensed, there is a high possibility that owner U is near vehicle 100A. Therefore, according to the above-described configuration, transition of the connector to the unlocked state contrary to the intention of owner U of vehicle 100A is suppressed. Thus, discharging connector 200 is less likely to be stolen.

The terminal of owner U of vehicle 100A is not limited to electronic key 320 (remote key). For example, mobile terminal 400 may be registered in ECU 150 as the terminal of owner U of vehicle 100A. When mobile terminal 400 is present around vehicle 100A, determination of YES may be made in S55A. ECU 150 and communication device 190 may function as the sensing device.

### [Other Embodiments]

The first power transmission in which the vehicle transmits the electric power discharged from the power storage device to the electrical facility has been illustrated in each of the above-described embodiments. However, the type of power transmission is not limited to the first power transmission (external power feeding), and the control according to each of the above-described embodiments may be applied to second power transmission in which the electrical facility transmits electric power for charging of the power storage device to the vehicle (external charging), or third power transmission in which electric power is bidirectionally exchanged between the vehicle and the electrical facility (BPT: Bidirectional Power Transfer).

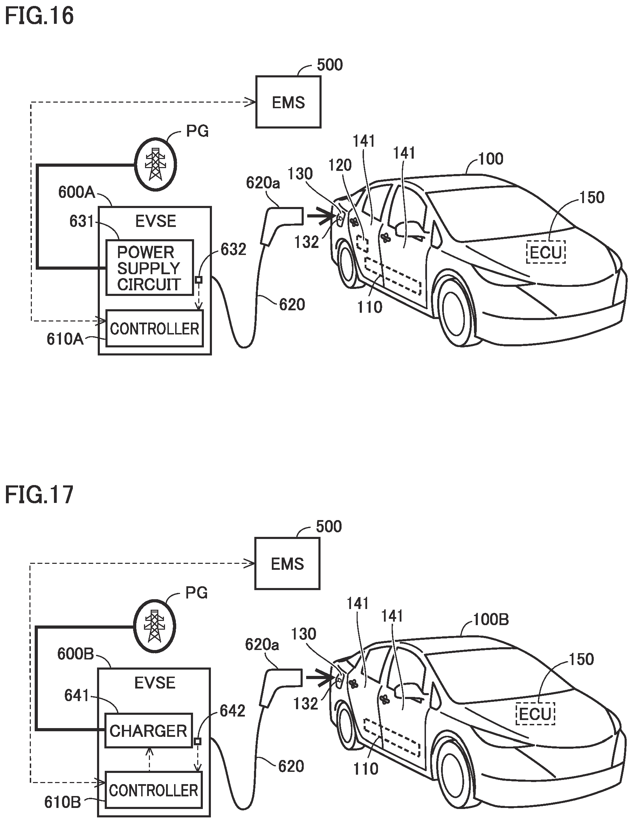

Fig. 16 shows a first example of a system in which the second power transmission (external charging) is performed. In the system shown in Fig. 16, an EVSE 600A performs the external charging of power storage device 110 in a state of being connected to vehicle 100 (Fig. 1) (plug-in state). "EVSE" stands for Electric Vehicle Supply Equipment.

EVSE 600A has a controller 610A, a power supply circuit 631 and a detector 632 built thereinto, and includes a charging cable 620. Charging cable 620 has a connector 620a (charging connector) at a tip thereof and includes a communication line and a power line therein. Port 132 is configured such that connector 620a is attachable thereto and detachable therefrom. When connector 620a is connected to port 132, the plug-in state is achieved. Power supply circuit 631 converts electric power received from a power system PG into electric power suitable for power feeding to the vehicle, and outputs the converted electric power to charging cable 620. Detector 632 includes various sensors that detect power feeding parameters (such as a current and a voltage), and outputs a result of detection to controller 610A. EVSE 600A outputs AC power to vehicle 100. Controller 610A is configured to be capable of communicating with each of ECU 150 and an EMS 500. "EMS" stands for Energy Management System.

EVSE 600A and vehicle 100 can operate in a dynamic control mode. In the dynamic control mode, EVSE 600A has the initiative in charging control. The power transmission control (charging control) may be left up to EVSE 600A. In the dynamic control mode, ECU 150 controls charger-discharger 120 (e.g., charging relay RL1 and charger 121 shown in Fig. 2) in accordance with an instruction from controller 610A. Controller 610A may cause vehicle 100 to perform energy management requested by EMS 500.

ECU 150 of vehicle 100 shown in Fig. 16 may repeatedly perform the process flow shown in any one of Figs. 5, 7, 9, 11, 12, 14, and 15 during a time period from when connector 620a of EVSE 600A is connected to port 132 to when connector 620a is disconnected from port 132. In the external charging, the charging current detected by monitoring unit 121a (Fig. 2), for example, corresponds to the connector current.

Fig. 17 shows a second example of a system in which the second power transmission (external charging) is performed. In the system shown in Fig. 17, a charger is mounted on an EVSE, not on a vehicle. A vehicle 100B shown in Fig. 17 has such a configuration that charger-discharger 120 is omitted from vehicle 100 shown in Fig. 1. An EVSE 600B has a controller 610B, a charger 641 and a detector 642 built thereinto and includes charging cable 620. Charger 641 includes a power conversion circuit (e.g., an inverter). Detector 642 includes various sensors that detect a state (such as a voltage, a current and a temperature) of charger 641, and outputs a result of detection to controller 610B. Charger 641 converts AC power supplied from power system PG into DC power in accordance with a command from controller 610B, and outputs the DC power to connector 620a. EVSE 600B outputs the DC power.

EVSE 600B performs the external charging of power storage device 110 in a state of being connected to vehicle 100B (plug-in state). When connector 620a of EVSE 600B is connected to port 132 of vehicle 100B, the plug-in state is achieved. During the external charging, the DC power output from EVSE 600B to vehicle 100B is input to port 132 and charged into power storage device 110. Controller 610B controls charger 641 in accordance with a request from EMS 500. Controller 610B uses power storage device 110 to perform energy management requested by EMS 500.

ECU 150 of vehicle 100B shown in Fig. 17 may repeatedly perform the process flow shown in any one of Figs. 5, 7, 9, 11, 12, 14, and 15 during a time period from when connector 620a of EVSE 600B is connected to port 132 to when connector 620a is disconnected from port 132.

Each of vehicles 100, 100A and 100B shown in Figs. 1, 13 and 17 is merely an example of a movable body that performs power transmission. For example, the vehicle may have a configuration that can be adapted to both AC charging and DC charging. The above-described control is also applicable to vehicles other than automobiles (such as railroad vehicles, ships, airplanes, amphibious machines, electric bicycles, and electric wheelchairs), movable machines (such as agricultural machines and architectural machines), and unmanned movable bodies (such as automated guided vehicles, walking robots, security robots, flight drones, underwater drones, robot cleaners, and space probes). A controller that controls a connector device of the movable body may be mounted not on the movable body but on a device (e.g., a server) or a mobile terminal outside the movable body.

Each of EVSEs 600A and 600B shown in Figs. 16 and 17 is also merely an example of an electrical facility. Any electrical facility (such as an accessory, a device, a power outlet, or an appliance) that performs power transmission with a movable body and communicates with the movable body as needed can be employed.

It should be understood that the embodiments disclosed herein are illustrative and non-restrictive in every respect. The scope of the present invention is defined by the terms of the claims, rather than the description of the embodiments above, and is intended to include any modifications within the scope and meaning equivalent to the terms of the claims.

### REFERENCE SIGNS LIST

100, 100A, 100B vehicle; 110 power storage device; 130 connection device; 131 lid; 132 port; 133 lock driving device; 134 operation unit; 141 door; 142 lock driving device; 150 ECU; 200 discharging connector; 210 first end; 220 second end; 310 antenna; 320 electronic key; 400 mobile terminal; 500 power load.

## Claims

1. A movable body comprising:
a port to and from which a connector for power transmission is attachable and detachable; and
a first lock device that switches between a locked state and an unlocked state of the connector connected to the port, wherein
the first lock device is configured to switch the connector to the locked state when the connector connected to the port is in the unlocked state and a current flowing through the connector is larger than a first threshold value.

2. The movable body according to claim 1, wherein
the first lock device is configured to:
switch the connector to the unlocked state, when an unlock operation is performed in a state where the current flowing through the connector in the locked state connected to the port is smaller than a second threshold value; and
decrease the current flowing through the connector to be smaller than the second threshold value, and thereafter, switch the connector to the unlocked state, when the unlock operation is performed in a state where the current flowing through the connector in the locked state connected to the port is larger than the second threshold value.

3. The movable body according to claim 2, wherein
the unlock operation is an operation performed by an owner of the movable body to switch the connector to the unlocked state.

4. The movable body according to claim 1, wherein
the first lock device is configured to switch the connector to the unlocked state when an unlock condition is satisfied, and
the unlock condition includes
a condition that the connector connected to the port is in the locked state, and
a condition that the current flowing through the connector is smaller than a second threshold value.

5. The movable body according to claim 4, wherein
the movable body is a vehicle including a door for getting on and off the vehicle, and a second lock device that switches between a locked state and an unlocked state of the door, and
the unlock condition further includes a condition that the door is in the unlocked state.

6. The movable body according to claim 4, further comprising
a sensing device that senses a terminal of an owner of the movable body, wherein
the unlock condition further includes a condition that the terminal is sensed by the sensing device.

7. The movable body according to claim 4, wherein
the unlock condition further includes a condition that a number of times of switching between the locked state and the unlocked state of the connector is smaller than a prescribed number of times.

8. The movable body according to claim 1, wherein
the first lock device is configured to switch the connector to the unlocked state when the connector connected to the port is in the locked state and the current flowing through the connector is smaller than a second threshold value.

9. The movable body according to any one of claims 1 to 8, wherein
the movable body is a vehicle including a power storage device,
the connector is a discharging connector including an electrical outlet,
the power transmission includes V2L (Vehicle to Load) to supply electric power stored in the power storage device from the discharging connector connected to the port to a power load connected to the electrical outlet, and
in the V2L, a current flowing through the discharging connector connected to the port varies in accordance with a state of the power load connected to the electrical outlet.

10. A controller that controls a connector device that switches between a locked state and an unlocked state of a connector for power transmission connected to a port of a movable body, wherein
the controller is configured to control the connector device to switch the connector to the locked state when the connector connected to the port is in the unlocked state and a current flowing through the connector is larger than a threshold value.

11. A controller that controls a connector device that switches between a locked state and an unlocked state of a connector for power transmission connected to a port of a movable body, wherein
the controller is configured to:
predict a change in a current flowing through the connector in the unlocked state connected to the port; and
control, based on a result of prediction, the connector device to switch the connector to the locked state before the current flowing through the connector becomes larger than a threshold value.

12. The controller according to claim 11, wherein
the controller is configured to:
predict, based on the result of prediction, a time period until the current flowing through the connector in the unlocked state connected to the port reaches the threshold value; and
control the connector device to switch the connector to the locked state when the predicted time period is shorter than a prescribed time period.

13. The controller according to claim 12, wherein
the controller is configured to predict the time period until the current flowing through the connector reaches the threshold value based on a present value of the current flowing through the connector in the unlocked state connected to the port and a predicted rate of increase in the current, and
the prescribed time period is longer than a time period required for the connector device to switch the connector from the unlocked state to the locked state.

14. A connector lock control method comprising:
determining whether a connector connected to a port of a movable body is in an unlocked state, when power transmission between the port and the connector connected to the port is being performed;
determining whether a current flowing through the connector connected to the port is equal to or larger than a threshold value, when the power transmission is being performed; and
switching the connector to a locked state when the connector connected to the port is in the unlocked state and the current flowing through the connector is equal to or larger than the threshold value.

15. A connector lock control method comprising:
determining whether a connector connected to a port of a movable body is in an unlocked state, when power transmission between the port and the connector connected to the port is being performed;
predicting a change in a current flowing through the connector in the unlocked state connected to the port, when the power transmission is being performed;
determining, based on a result of the prediction, whether the current flowing through the connector reaches a threshold value within a time period from a present time point to a time point after a prescribed time period elapses; and
switching the connector to a locked state when it is determined that the current flowing through the connector reaches the threshold value within the time period.
